# EUROPÄISCHE PATENTSCHRIFT

(11) **EP 1 884 161 B1**
(45) Veröffentlichungstag und Bekanntmachung des Hinweises auf die Patenterteilung: **12.09.2012**
(21) Anmeldenummer: 07113012.4
(22) Anmeldetag: 24.07.2007
(51) Int. Cl.: A21C 9/04

(54) **Verfahren und Vorrichtung zum Belegen oder Befüllen von Zwischenprodukten**
Method and device for garnishing or filling semi-finished products
Procédé et dispositif destinés au garnissage ou remplissage de produits intermédiaires

(30) Priorität: 31.07.2006 DE 102006035271
(43) Veröffentlichungstag der Anmeldung: 06.02.2008
(73) Patentinhaber: Dr. AUGUST OETKER NAHRUNGSMITTEL KG, 33617 Bielefeld (DE)
(72) Erfinder: Rohe, Thomas, 49632, Essen i.O. (DE); große Kohorst, Werner, 49413, Dinklage (DE); Dr. Spiegel, Udo, 33619, Bielefeld (DE); Schäfer, Thomas, 33659, Bielefeld (DE); Pisch, Torsten, 33719, Bielefeld (DE)
(74) Vertreter: Taruttis, Stefan Georg

(56) Entgegenhaltungen:
- EP-A1- 1 388 286
- EP-A1- 1 566 101
- EP-A2- 0 947 137

## Beschreibung

Die Erfindung betrifft ein Verfahren und eine Vorrichtung zum Belegen oder Befüllen von über einen Produktförderer herangeführten Zwischenprodukten, insbesondere von Lebensmitteln, während eines Produktions- oder Abgabezyklus mit schütt- oder rieselfähigem Gut.

Die EP 0 947 137 A2 beschreibt eine Vorrichtung zum Verteilen von Artikeln auf einen Träger, insbesondere einen Pizzaboden, bei der der Pizzaboden zwischen klemmenden Segmenten angeordnet wird, über denen sich ein schwenkbarer Zylinder erstreckt. Vorgewogene Artikel werden nach Durchtritt durch einen Trichter, in dem Prallbleche angeordnet sind, mittels des Zylinders auf den geklemmten Träger geleitet.

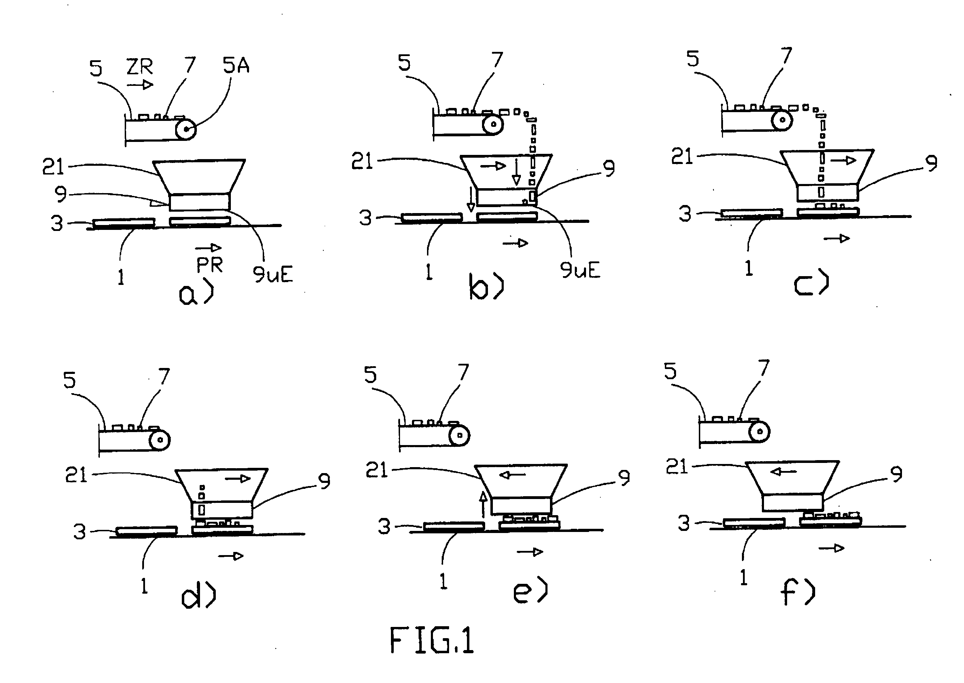

Unter Bezug auf Fig. 1 wird nachfolgend ein nicht erfindungsgemäßes Verfahren zum Belegen von Pizzaböden mit geriebenem Käse beschrieben, das mit einer nicht erfindungsgemäßen Vorrichtung ausgeführt wird.

Die Vorrichtung umfaßt einen Produktförderer 1 in Form eines Förderbandes, auf dem Zwischenprodukte 3 (Pizzaböden) entlang einer Produktförderrichtung PR kontinuierlich gefördert werden, und eine Zuführeinrichtung 5 in Form eines Förderbandes, auf dem Gut 7 (geriebener Käse) intermittierend entlang einer Zuführrichtung ZR gefördert wird, um das Gut 7 in einem Abgabezyklus durch einen Leitschacht 9 mit einem Aufnahmebereich 21 auf einen Pizzaboden 3 abzugeben, wobei der Leitschacht 9 einen an den kreisförmigen Pizzaboden angepassten kreisförmigen Querschnitt aufweist. Der Aufnahmebereich 21 weist an seinem oberen Ende eine quadratische Aufnahmeöffnung auf, deren senkrecht zur Produktförderrichtung PR verlaufenden Seitenkanten eine Länge aufweisen, die an die Zuführeinrichtung 5 angepasst ist, und verjüngt sich unten auf den kreisförmigen Leitschacht 9.

In den Figuren 1a) bis f) sind verschiedene Stadien eines Abgabezyklus dargestellt. In Fig. 1a) befindet sich der Leitschacht 9 zu Beginn des Abgabezyklus in seiner hintersten, in Fig. 1 am weitesten links dargestellten Position über dem Pizzaboden 3 und wird ab hier deckungsgleich mit dem Pizzaboden 3 in Produktförderrichtung PR bewegt. In Fig. 1b) wird der Leitschacht 9 in Richtung auf den Pizzaboden 3 abgesenkt und gleichzeitig in Produktförderrichtung PR verfahren, um von der Zuführeinrichtung 5 abgefördertes Gut 7 auf den Pizzaboden 3 zu leiten. Wie in Fig. 1c) dargestellt, wird der Leitschacht 9 mit dem Pizzaboden 3 weiter in Produktförderrichtung PR verfahren, wodurch der Pizzaboden 3 in Produktförderrichtung PR von vorne nach hinten mit dem Gut 7 belegt wird. In Fig. 1d) ist die Zuführeinrichtung 5 angehalten, da eine vorbestimmte Menge des Guts 7 abgefördert und auf den Pizzaboden 3 abgegeben ist. Der Produktförderer 1 und der Leitschacht 9 werden jedoch weiter in Produktförderrichtung PR verfahren, bis das Gut 7 vollständig auf dem Pizzaboden 3 aufliegt. Liegt das von der Zuführeinrichtung 5 abgeförderte Gut 7 vollständig auf dem Pizzaboden 3 auf, so wird der Leitschacht 9 mit dem Pizzaboden 3 weiter in Produktförderrichtung PR verfahren, und der Leitschacht 9 dabei von dem Pizzaboden 3 abgehoben, wobei der Leitschacht 9 solange mit dem Pizzaboden 3 in Produktförderrichtung PR bewegt wird, bis ein unterer Endabschnitt 9uE des Leitschachts 9 so weit vertikal von dem Pizzaboden 3 entfernt ist, daß der Pizzaboden 3 aus dem Leitschacht 9 abgefördert werden kann, ohne daß das auf dem Pizzaboden 3 aufliegende Gut 7 den Leitschacht 9 berührt, wie in Fig. 1e) dargestellt. Der Leitschacht 9 wird dann entgegen der Produktförderrichtung PR bewegt, wie in Fig. 1f) dargestellt, bis er die in Fig. 1a) dargestellte Anfangsposition erreicht, um einen neuen Abgabezyklus für den auf dem Produktförderer 1 nächsten Pizzaboden 3 zu beginnen.

Ein Nachteil des Verfahrens und der Vorrichtung gemäß Fig. 1 ist, daß die Taktzeiten aufgrund des vertikalen und horizontalen Verfahrens des Leitschachtes 9 relativ hoch sind. Ein weiterer Nachteil ist, daß ein Mechanismus zum Bewegen des Leitschachtes 9 und dessen Aufnahmebereichs 21 aufwendig ist, da diese sowohl vertikal als auch horizontal bewegt werden müssen und die zu bewegende Masse groß ist.

Aufgabe der vorliegenden Erfindung ist es daher, die Vorrichtung und das Verfahren gemäß der Fig. 1 derart weiterzuentwickeln, daß sich eine kürzere Taktzeit und ein einfacherer Mechanismus zum Bewegen des Leitschachts 9 und dessen Aufnahmebereichs 21 ergibt.

Diese Aufgabe wird verfahrensseitig bei einem gattungsgemäßen Verfahren erfindungsgemäß gelöst durch: d1) Bereitstellen von bewegbaren, in Produktförderrichtung gesehen vorderen und hinteren Leitbereichen; d2) Bewegen des in Produktförderrichtung vorderen Leitbereichs zwischen den Leitschacht und das Zwischenprodukt und anschließend; d3) Bewegen des in Produktförderrichtung hinteren Leitbereichs zwischen den Leitschacht und das Zwischenprodukt, wobei der vordere Leitbereich im Schritt d2) zwischen den Leitschacht und das Zwischenprodukt bewegt wird, bevor der Leitschacht in der Anfangsposition zu Beginn des Abgabezyklus angeordnet ist, und/oder der vordere Leitbereich von dem Zwischenprodukt abgehoben wird, bevor der Leitschacht in seiner Endposition am Ende des Abgabezyklus angeordnet ist.

Bevorzugt werden zwischen den Schritten d2) und d3) oder gleichzeitig mit dem Schritt d2) oder d) zwei gegenüberliegende in Produktförderrichtung gesehen mittlere Leitbereiche zwischen dem Leitschacht und dem Zwischenprodukt angeordnet.

Vorteilhaft werden die Zwischenprodukte auf dem Produktförderer kontinuierlich gefördert.

Ein unterer Rand des vorderen und/oder der mittleren und/oder des hinteren Leitbereichs bzw. Leitbereiche wird im Schritt d) vorteilhaft in einem minimalen vertikalen Abstand von weniger als 5 cm oder weniger als 3 cm oder weniger als 2 cm oder weniger als 1 cm von dem Zwischenprodukt angeordnet.

Ein unterer Rand des vorderen und/oder der mittleren und/oder des hinteren Leitbereichs bzw. Leitbereiche wird bevorzugt auf dem Produktförderer das Zwischenprodukt umschließend angeordnet.

Der Leitschacht kann zu Beginn des Abgabezyklus aus seiner Anfangsposition in Richtung auf das Zwischenprodukt abgesenkt und am Ende des Abgabezyklus in seine Endposition angehoben werden.

Die Aufgabe wird vorrichtungsseitig erfindungsgemäß gelöst durch eine Vorrichtung zum Belegen oder Befüllen von über einen Produktförderer herangeführten Zwischenprodukten mit schütt- oder rieselfähigem Gut mittels einer Zuführeinrichtung durch einen Leitschacht, wobei der Leitschacht durch entlang seines Umfangs angeordnete, selektiv bewegbare Leitbereiche umfangsbereichsweise in Richtung auf das Zwischenprodukt verlängerbar ist.

Bevorzugt ist der Leitschacht durch mindestens einen vorderen und hinteren Leitbereich verlängerbar.

Vorteilhaft ist der Leitschacht zusätzlich durch zwei mittlere Leitbereiche verlängerbar.

Bevorzugt sind die vorderen, mittleren und hinteren Leitbereiche (17v, 17m, 17h) integral durch einen Leitring gebildet.

Der Leitring kann an einer Schwenkachse gehalten sein, die durch einen Antrieb drehbar ist, um den Leitring zu verschwenken, wobei der Leitring vorteilhaft einen unteren Endabschnitt des Leitschachts umgreift.

Der Leitring kann koaxial zu dem unteren Endabschnitt des Leitschachts angeordnet sein, denselben Querschnitt aufweisen wie der untere Endabschnitt und durch eine Schwenkachse gehalten sein, die durch einen Antrieb drehbar ist, um den Leitring zu verschwenken.

Der Leitring kann den Leitschacht vollständig umgreifen.

Bevorzugt ist der Leitring an dem Leitschacht gehalten.

Bevorzugt weist der Leitschacht an seinem oberen Ende einen sich konisch erweiternden Aufnahmebereich auf.

Vorteilhaft sind dem Leitschacht zwei, in Produktförderrichtung gegenüberliegende Kolben-Zylinder-Einheiten zugeordnet, die jeweils mit einem Ende an dem Leitring und mit dem anderen Ende an dem Aufnahmebereich festgelegt sind.

Der Leitring kann eine Innenkontur aufweisen, die einer Außenkontur des Zwischenprodukts entspricht, beispielsweise eines Lebensmittels mit einer Oberfläche bzw. eines Behälters mit einer Öffnung, die jeweils parallel zur Oberfläche des Produktförderers gefördert werden.

Der Leitring kann eine Innenkontur aufweisen, die kleiner als eine Außenkontur des Zwischenprodukts ist, um das Gut nur auf einem Teilbereich des Zwischenprodukts anzuordnen.

Die Erfindung wird nachfolgend anhand von vier Ausführungsbeispielen unter Bezugnahme auf eine Zeichnung erläutert. Es zeigen:
Fig. 1a) bis f) schematische Darstellungen verschiedener Stadien eines Verfahrens zum Belegen eines Zwischenproduktes während eines Abgabezyklus mit schütt- oder rieselfähigem Gut gemäß dem Stand der Technik, das mit einer bekannten Vorrichtung ausgeführt wird;
Fig. 2a) bis f) schematische Darstellungen verschiedener Stadien eines erfindungsgemäßen Verfahrens zum Belegen eines Zwischenproduktes während eines Abgabezyklus mit schütt- oder rieselfähigem Gut, das mit einer erfindungsgemäßen Vorrichtung ausgeführt wird;
Fig. 2g) eine Draufsicht auf das Zwischenprodukt der Fig. 2c) entlang der Linie IIG - IIG der Fig. 2c);
Fig. 3a) und b) eine vergrößerte schematische Darstellung eines Leitschachtes 9 mit Aufnahmebereich 21 der Vorrichtung der Fig. 2, wobei in Fig. 3a) die Situation zu Beginn des Abgabezyklus und in Fig. 3b) die Situation am Ende des Abgabezyklus dargestellt ist;
Fig. 4 eine schematische Darstellung eines weiteren Ausführungsbeispiels der erfindungsgemäßen Vorrichtung;
Fig. 5 eine schematische Darstellung eines weiteren Ausführungsbeispiels der erfindungsgemäßen Vorrichtung;
Fig. 6 eine schematische Darstellung eines Querschnitts durch eine erfindungsgemäße Vorrichtung gemäß einem weiteren Ausführungsbeispiel; und
Fig. 7a) bis f) schematische Seitenansichten der Vorrichtung der Fig. 6 in verschiedenen Stadien während eines Abgabezyklus.

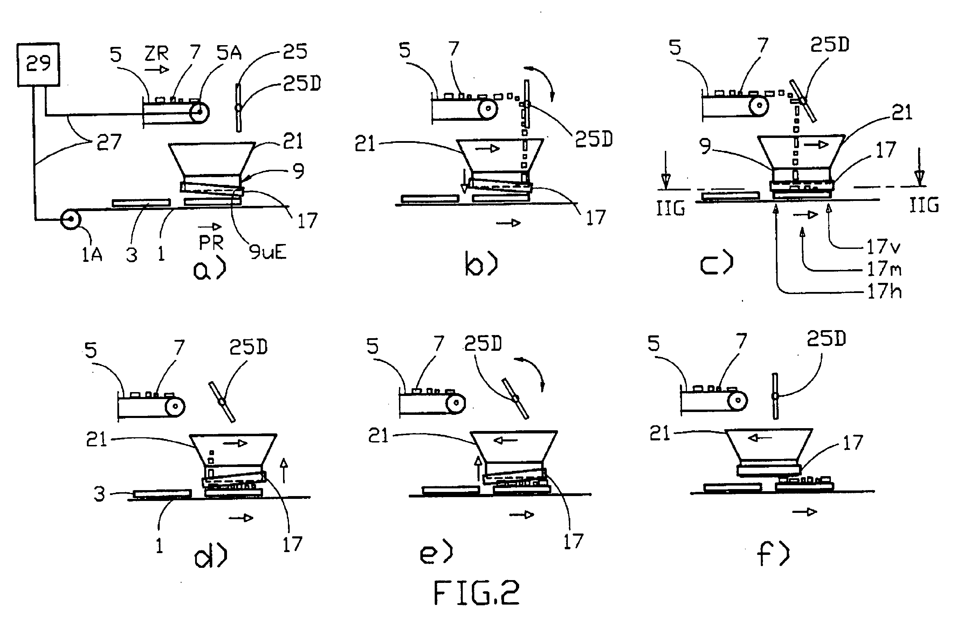

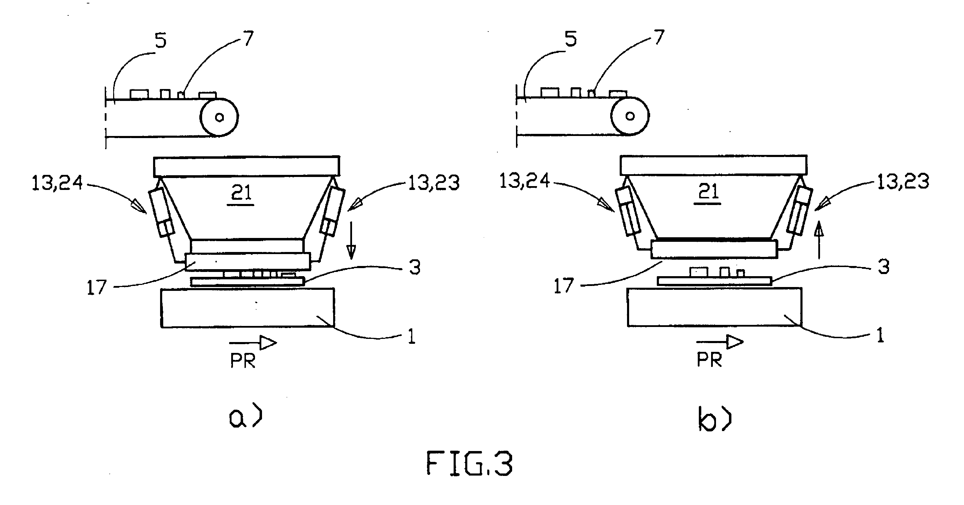

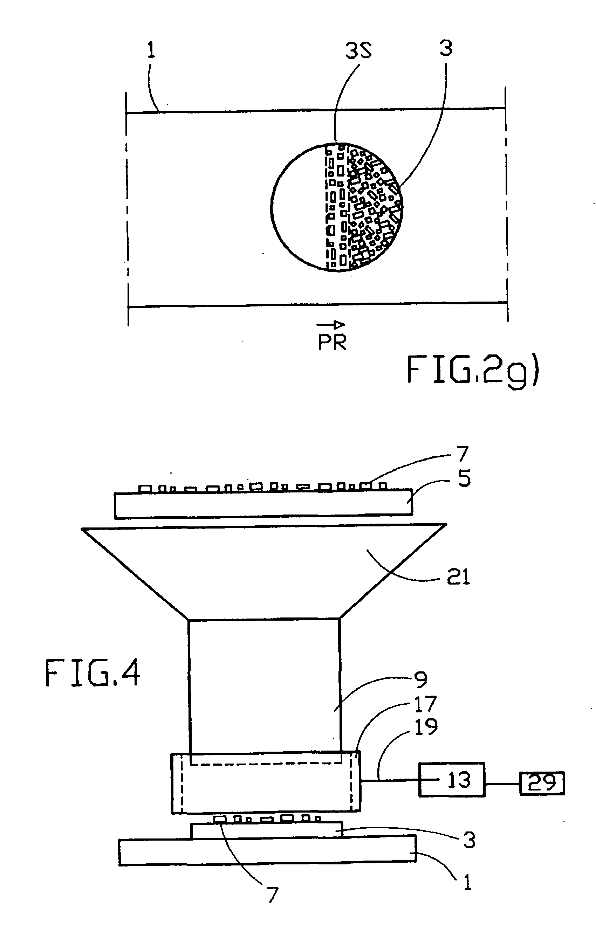

Unter Bezug auf Fig. 2 und 3 wird folgend ein erstes Ausführungsbeispiel des erfindungsgemäßen Verfahrens und der erfindungsgemäßen Vorrichtung beschrieben.

Die Vorrichtung umfaßt einen Produktförderer 1 in Form eines Förderbandes, auf dem Zwischenprodukte 3 (kreisförmige Pizzaböden) entlang einer Produktförderrichtung PR kontinuierlich gefördert werden. Eine Zuführeinrichtung 5 in Form eines Förderbandes ist in einem Abstand oberhalb des Produktförderers 1 angeordnet, mittels der ein Gut 7 (geriebener Käse) intermittierend entlang einer Zuführrichtung ZR gefördert wird, um jeweils in einem Abgabezyklus eine vorbestimmte Menge des Guts 7 auf den Pizzaboden 3 abzugeben.

Zwischen dem Produktförderer 1 und der Zuführeinrichtung 5 ist ein Leitschacht 9 mit einem Aufnahmebereich 21 in einer Anfangsposition angeordnet, um das Gut 7 von der Zuführeinrichtung 5 durch den Aufnahmebereich 21 und den Leitschacht 9 auf das Zwischenprodukt 3 zu leiten, wobei der Leitschacht 9 und sein Aufnahmebereich 21 von ihrer Form her wie zuvor zu Fig. 1 beschrieben aufgebaut sind.

Eine Steuerung 29 ist mit nicht dargestellten Lichttastern, die die Position der Zwischenprodukte 3 auf dem Produktförderer 1 erfassen, und über Leitungen 27 mit einem Antrieb 1A des Produktförderers 1 und einem Antrieb 5A der Zuführeinrichtung 5 verbunden.

Die Lichttaster geben Signale an die Steuerung 29, die der Lage eines Zwischenprodukts 3 auf dem Produktförderer 1 entsprechen, und die Steuerung 29 aktiviert den Antrieb 5A entsprechend dieser Signale, um von der Zuführeinrichtung 5 eine vorbestimmte Menge des Guts 7 durch den Aufnahmebereich 21 und den Leitschacht 9 auf das Zwischenprodukt 3 abzugeben.

Ein unterer Endabschnitt 9uE des Leitschachts 9 ist von einem Leitring 17 umgeben, der von zwei Kolben-Zylinder-Einheiten 23, 24 getragen ist, die jeweils mit einem Ende an einem oberen Ende des Aufnahmebereichs 21 befestigt sind und die mit ihrem anderen Ende den Leitring 17 tragen.

Die Kolben-Zylinder-Einheiten 23, 24 sind pneumatisch betätigt, wobei deren Aktivierung ebenfalls von der Steuerung 29 vorgegeben wird.

Oberhalb des Aufnahmebereichs 21 ist auf Höhe der Zuführeinrichtung 5 eine Prallplatte 25 angeordnet, die um eine Drehachse 25D drehbar ist und eine Länge entlang der Drehachse 25D aufweist, die mindestens der der Zuführeinrichtung 5 entlang dieser Richtung entspricht.

Die Prallplatte 25 ist um ihre Drehachse 25D mittels eines nicht dargestellten Antriebs verschwenkbar, der durch die Steuerung 29 angesteuert wird.

Unter Bezug auf die Fig. 2a) bis f) wird nachfolgend ein Abgabezyklus zum Belegen des Pizzabodens 3 mit Gut 7 beschrieben.

Zu Beginn eines Abgabezyklus in Fig. 2a) ist die Zuführeinrichtung 5 mit Gut 7 gefüllt, und der Antrieb 5A ist nicht aktiviert, so daß das Gut 7 zum Abfördern bereit auf der Zuführeinrichtung 5 aufliegt. Die Prallplatte 25 befindet sich ebenfalls in einem Ausgangszustand in einer Orientierung senkrecht zu dem Produktförderer 1. Der Produktförderer 1 fördert die Zwischenprodukte 3 mit einer kontinuierlichen Geschwindigkeit und einem festen gegenseitigen Abstand entlang der Produktförderrichtung PR. Die Steuerung 29 hat einen nicht dargestellten Antrieb für den Leitschacht 9 derart gesteuert, daß dieser entgegen der Produktförderrichtung PR in seine dargestellte Anfangsposition bewegt wurde. Ferner aktiviert die Steuerung 29 die in Produktförderrichtung PR vordere Kolben-Zylinder-Einheit 23, wodurch ein in Produktförderrichtung PR vorderer Abschnitt 17v des Leitrings 17 in Richtung auf den Produktförderer 1 abgesenkt wird.

Der Antrieb 1A des Produktförderers 1, der Antrieb 5A der Zuführeinrichtung 5, die Kolben-Zylinder-Einheiten 23, 24, der Antrieb zum Verschwenken der Prallplatte 25 und der Antrieb zum Bewegen des Leitschachtes 9 in und entgegen der Produktförderrichtung PR sind von der Steuerung 29 in Abhängigkeit von Signalen der Lichttaster gesteuert, die die Position des jeweils zu belegenden Zwischenprodukts 3 relativ zu der ortsfesten Zuführeinrichtung 5 angeben.

Fig. 2b) zeigt den Beginn einer weiteren Phase des Abgabezyklus, in der der Antrieb 5A von der Steuerung 29 aktiviert ist, sodaß das Gut 7 von der Zuführeinrichtung 5 abgefördert wird und gegen die Prallplatte 25 prallt, von der es durch den Aufnahmebereich 21 und den Leitschacht 9 auf das Zwischenprodukt 3 fällt. Da zwischen dem unteren Endabschnitt 9uE des Leitschachtes 9 und dem Zwischenprodukt 3 der vordere Abschnitt 17v des Leitrings 17 angeordnet ist, wird das Gut 3 durch eine Innenfläche des vorderen Abschnitts 17v des Leitrings 17 auf das Zwischenprodukt 3 gelenkt, so daß verhindert wird, daß das Gut 7 auf den Produktförderer 1 fällt. Das Zwischenprodukt 3 wird nun von vorne nach hinten mit dem Gut 7 belegt.

Nun wird die in Produktförderrichtung PR hintere Kolben-Zylinder-Einheit 24 aktiviert, um auch einen hinteren Abschnitt 17h des Leitrings 17 auf das Zwischenprodukt 3 abzusenken.

Zusätzlich wird der Antrieb für die Prallplatte 25 aktiviert, um die Prallplatte 25 in einen geeigneten Anstellwinkel zu verschwenken. Der Steuerung 29 liegen Daten über die Verteilung des Guts 7 auf der Zuführeinrichtung 5 vor, das heißt welche Masse des Guts 7 in welchem Abstand von einem Abwurfrand der Zuführeinrichtung 5 angeordnet ist. Ferner liegen der Steuerung 29 Daten über die zu belegende Fläche des Zwischenprodukts 3 vor, so daß die Steuerung 29 anhand eines Streifens 3S des Zwischenprodukts 3, der von der Zuführeinrichtung 5 momentan mit Gut 7 belegt wird, siehe Fig. 2g), den momentanen Bedarf an Gut 7 berechnen kann. Da der Steuerung 29 die Fördergeschwindigkeit der Zuführeinrichtung 5 bekannt ist, kann diese anhand der Menge des sich der Prallplatte 25 nähernden Guts 7 und des momentanen Bedarfs (das heißt des momentan zu belegenden Streifens) einen optimalen Anstellwinkel für die Prallplatte 25 bestimmen, um das Gut 7 gleichmäßig auf dem Zwischenprodukt 3 zu verteilen.

In Fig. 2c) ist der hintere Abschnitt 17h des Leitrings 17 auf die Höhe des vorderen Abschnitts 17v des Leitrings 17 abgesenkt, so daß ein unterer Rand des Leitrings 17 parallel zu dem Produktförderer 1 verläuft. Das Zwischenprodukt 3 wird weiterhin kontinuierlich in Produktförderrichtung PR gefördert, wodurch in Fig. 2c) nun ein mittlerer Streifen des Zwischenprodukts 3 mit Gut 7 belegt wird. Der Anstellwinkel der Prallplatte 25 wird weiterhin von der Steuerung 29 entsprechend eingestellt, wie oben beschrieben.

In Fig. 2d) ist die vorbestimmte Masse des Zwischenprodukts 3 abgefördert, so daß die Steuerung 29 die Zuführeinrichtung 5 angehalten hat. Da die Zuführeinrichtung 5 gerade von der Steuerung 29 angehalten worden ist, befindet sich noch Gut 7 im freien Fall auf das Zwischenprodukt 3. Der Leitschacht 9 und das Zwischenprodukt 3 werden daher weiterhin in Produktförderrichtung PR verfahren.

Die Steuerung 29 hat jedoch bereits die in Produktförderrichtung PR vordere Kolben-Zylinder-Einheit 23 aktiviert, um den vorderen Abschnitt 17v des Leitrings 17 von dem Zwischenprodukt 3 abzuheben, während der hintere Abschnitt 17h des Leitrings 17 noch in abgesenkter Stellung verbleibt, um das noch auf das Zwischenprodukt 3 fallende Gut 7 auf das Zwischenprodukt 3 zu lenken.

Der vordere Abschnitt 17v des Leitrings 17 wird mit der Kolben-Zylinder-Einheit 23 so weit von dem Zwischenprodukt 3 abgehoben, daß das belegte Zwischenprodukt 3 in Produktförderrichtung PR aus dem Leitschacht 9 gefördert werden kann, ohne daß Belagteile an dem Leitring 17 anstoßen.

In Fig. 2e) ist das Zwischenprodukt 3 vollständig mit dem Gut 7 belegt. Daher wird nun auch die hintere Kolben-Zylinder-Einheit 24 von der Steuerung 29 aktiviert, um auch den hinteren Abschnitt 17h des Leitrings 17 von dem Zwischenprodukt 3 abzuheben.

Ferner wird der Antrieb für das horizontale Verfahren des Leitschachtes 9 umgeschaltet, um den Leitschacht 9 anzuhalten und entgegen der Produktförderrichtung PR in seine Anfangsposition gem. Fig. 1a zurück zu verfahren. Die Steuerung 29 aktiviert ferner den Antrieb für die Verschwenkung der Prallplatte 25, um diese in ihrer Ausgangsstellung senkrecht zu dem Produktförderer 1 anzuordnen.

Der Produktförderer 1 fördert währenddessen das gerade belegte Zwischenprodukt 3 in Produktförderrichtung PR aus dem Leitschacht 9.

In Fig. 2f) befindet sich die Zuführeinrichtung 5 weiterhin im Ruhezustand, so daß weiterhin kein Gut 7 gefördert wird. Die Prallplatte 25 ist senkrecht zu dem Produktförderer 1 angeordnet. Der Produktförderer 1 fördert die Zwischenprodukte 3 mit einer kontinuierlichen Geschwindigkeit entlang der Produktförderrichtung PR.

Der Leitring 17 ist durch die Kolben-Zylinder-Einheiten 23, 24 vollständig angehoben, so daß er parallel zu dem Produktförderer 1 verläuft. Die Geschwindigkeit für das Abheben des hinteren Abschnitts 17h des Leitrings 17 ist ausreichend hoch, so daß der hintere Abschnitt 17h des Leitrings 17 nicht an dem nächsten zu belegenden Zwischenprodukt 3 anstößt.

Der Leitschacht 9 wird weiter entgegen der Produktförderrichtung PR verfahren, um die in Fig. 2a) gezeigte Anfangsposition zu erreichen.

Nun wird die vordere Kolben-Zylinder-Einheit 23 von der Steuerung 29 aktiviert, um den vorderen Abschnitt 17v des Leitrings 17 in Richtung auf den Produktförderer 1 abzusenken.

Dadurch wird die in Fig. 2a) dargestellte Anfangssituation erreicht, und ein neuer Abgabezyklus zur Belegung des nächsten Zwischenprodukts 3 kann beginnen.

Die Prallplatte 25 kann starr ausgebildet sein oder entfallen, wenn die Zuführeinrichtung 5 nur mit geringen Geschwindigkeiten betrieben wird, bei denen das Gut 7 direkt auf einen gewünschten Bereich des Zwischenprodukts 3 fällt.

Im Gegensatz zu dem unter Bezug auf Fig. 1 beschriebenen Vorrichtung, bei der der Leitschacht 9 zunächst als ganzes auf das Zwischenprodukt 3 abgesenkt wird, das Belegen durchgeführt wird und abschließend der Leitschacht 9 wieder als ganzes von dem Zwischenprodukt 3 abgehoben und zurück in die Anfangsposition bewegt wird, wird bei der vorliegenden Erfindung der vordere Abschnitt 17v des Leitrings 17 bereits in Richtung des Produktförderers 1 bewegt, wenn der Leitschacht 9 noch nicht vollständig oberhalb des Zwischenprodukts 3 angeordnet ist (zwischen Fig. 2f und 2a), und der vordere Abschnitt des Leitrings 17 von dem Zwischenprodukt 3 abgehoben, wenn das Belegen des Zwischenprodukts 3 mit dem Gut 7 noch nicht vollständig abgeschlossen ist (Fig. 2d), wodurch sich die Taktzeit gegenüber der Vorrichtung nach Fig. 1 um die für das Anheben und Absenken des Leitschachtes 9 benötigte Zeit verringert, der vorliegend nur horizontal verfahren wird.

Dadurch kann beispielsweise eine Taktzeit von ca. 0,8 Sekunden erreicht werden, das heißt es können mit der Vorrichtung bzw. dem Verfahren gemäß Fig. 2 bis zu 75 Pizzaböden pro Minute belegt werden.

Der Leitring 17 bildet somit auf einfache Weise Leitbereiche, um die der Leitschacht 9 zeitlich gesteuert verlängert wird, wobei ein vorderer Abschnitt 17v des Leitrings 17 einen vorderen Leitbereich, ein hinterer Abschnitt 17h des Leitrings 17 einen hinteren Leitbereich und dazwischenliegende, gegenüberliegende mittlere Abschnitte 17m des Leitrings 17 mittlere Leitbereiche bilden, und das Gut 7 jeweils durch eine entsprechende Innenfläche auf das Zwischenprodukt 3 gelenkt wird.

Unter Bezug auf Fig. 4 wird nachfolgend ein weiteres Ausführungsbeispiel der Erfindung beschrieben. Der Aufbau der Fig. 4 entspricht dem unter Bezug auf Fig. 2 und 3 beschriebenen Aufbau bis auf die Tatsache, dass der Leitring 17 um eine Schwenkachse 19 schwenkbar gehalten ist, die von einem Antrieb 13, einem Elektromotor, betätigt ist, der von der Steuerung 29 aktiviert wird, wobei die Schwenkachse 19 fest bezüglich des Leitschachts 9 angeordnet ist.

Der Antrieb 13 wird zusammen mit der Schwenkachse 19 und dem Leitring 17 in vorgegebener zeitlicher Relation zu dem Leitschacht 9 bewegt, wobei vorzugsweise der Aufnahmebereich 21, der Leitschacht 9, der Leitring 17, die Schwenkachse 19 und der Antrieb 13 mittels des gleichen Antriebs synchron zueinander in und entgegen der Produktförderrichtung PR bewegt werden.

Der Leitring 17 wird durch den Antrieb 13 ähnlich wie in Fig. 2 bewegt, wobei jedoch der in Fig. 2c) dargestellte Zustand nicht erreicht wird, da der Leitring 17 durch den Schwenkantrieb 13 nicht als ganzes auf den Produktförderer 1 abgesenkt werden kann. Der Leitring 17 der Fig. 4 führt somit eine reine Schwenkbewegung um die Schwenkachse 19 aus, wobei zunächst ein vorderer Abschnitt 17v des Leitrings 17 um die Schwenkachse 19 auf das Zwischenprodukt 3 abgesenkt, und ein hinterer Abschnitt 17h angehoben wird, und danach der vordere Abschnitt 17v angehoben und der hintere Abschnitt 17h abgesenkt wird.

Die Anordnung gemäß Fig. 4 ist aufgrund ihres einfachen Aufbaus vorteilhaft.

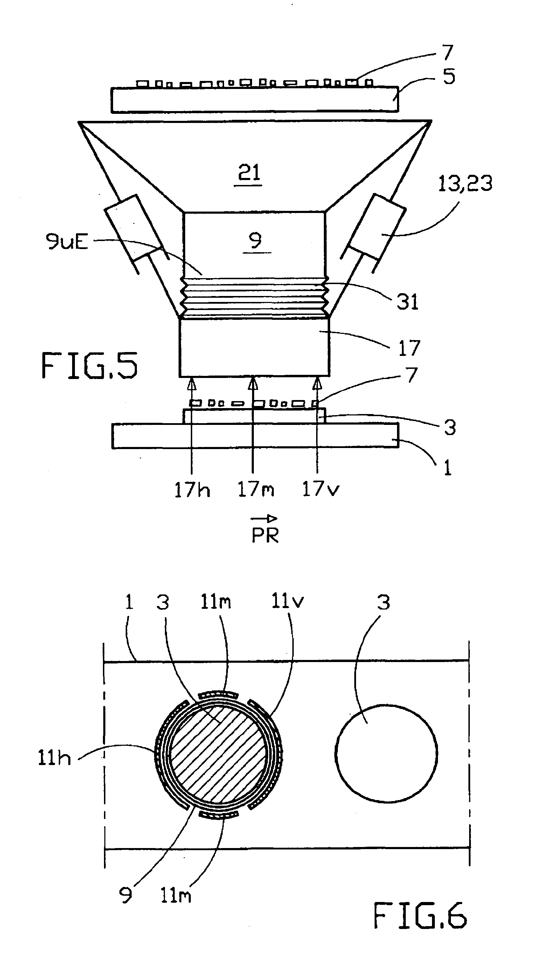

Unter Bezug auf Fig. 5 ist nachfolgend ein weiteres Ausführungsbeispiel der Erfindung beschrieben.

Der Aufbau der Fig. 5 entspricht im wesentlichen dem unter Bezug auf Fig. 2 und 3 beschriebenen Aufbau bis auf den konstruktiven Unterschied, daß der untere Endabschnitt 9uE des Leitschachts 9 und der Leitring 17 durch eine elastische Verbindung, wie z. B. ein Faltenbalg 31, miteinander verbunden sind. Der Leitschacht 9 und der Leitring 17 weisen vorliegend einen kreisförmigen Querschnitt auf.

Der Leitring 17 wird durch Kolben-Zylinder-Einheiten 23, 24 wie unter Bezug auf Fig. 2 und 3 beschrieben, bewegt. Wird der Leitring 17 auf das Zwischenprodukt 3 abgesenkt, so längt sich der Faltenbalg 31 entsprechend, so daß kein Gut 7 durch einen ansonsten vorhandenen Spalt zwischen dem unteren Endabschnitt 9uE und dem Leitring 17 nach außen dringen kann.

Dadurch, daß der Leitschacht 9 und der Leitring 17 durch den Faltenbalg 31 miteinander verbunden sind, kann der Leitring 17 alternativ einen größeren oder kleineren Durchmesser als der Leitschacht 9 aufweisen. Allgemein kann der Leitring 17 somit die gleiche oder eine andere Querschnittsform wie der Leitschacht 9 aufweisen, und gegenüber dieser vergrößert oder verkleinert sein.

Dadurch, daß der Faltenbalg 31 zwischen dem Leitschacht 9 und dem Leitring 17 angeordnet ist, können der Leitschacht 9 und der Leitring 17 ferner verschiedene Querschnittsformen aufweisen. Beispielsweise kann der Leitschacht 9 einen kreisrunden Querschnitt aufweisen, und der Leitring 17 einen quadratischen Querschnitt aufweisen oder umgekehrt.

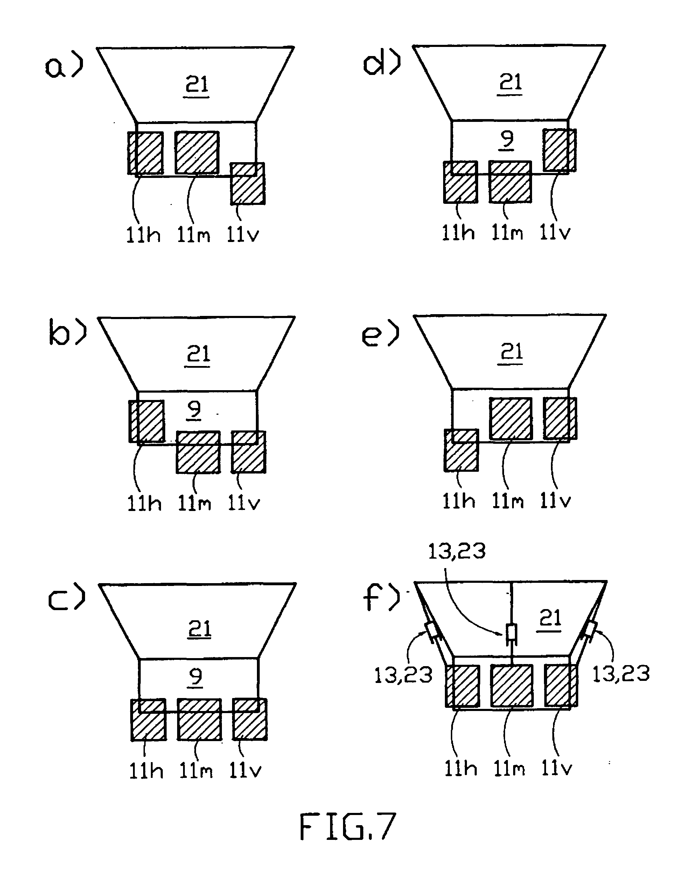

Unter Bezug auf die Fig. 6 und 7 ist nachfolgend ein weiteres Ausführungsbeispiel der Erfindung beschrieben.

In diesem Ausführungsbeispiel ist der Leitring 17 durch ein vorderes Wandungsstück 11v, zwei mittlere Wandungsstücke 11m und ein hinteres Wandungsstück 11h ersetzt, wobei diese jeweils mittels einer Kolben-Zylinder-Einheit 23 entlang dem Leitschacht 9 vertikal verfahrbar sind.

Die Wandungsstücke 11v, 11h umgreifen jeweils einen Umfangswinkelbereich von ca. 160° des Leitschachtes 9, wie in Fig. 6 dargestellt. Die gegenüberliegenden mittleren Wandungsstücke 11m umgreifen jeweils einen Umfangswinkelbereich von ca. 20° des Leitschachts 9.

Wie in Fig. 7f) dargestellt, ist jeweils eine Kolben-Zylinder-Einheit 23 mit einem Ende an einem oberen Ende des Aufnahmebereichs 21 und mit dem anderen Ende an dem oberen Ende des zugehörigen Wandungsstücks 11v, 11m, 11h befestigt. Die Kolben-Zylinder-Einheiten 23 sind wie zuvor beschrieben mit der Steuerung 29 verbunden, um die Wandungsstücke 11v, 11m, 11h in Richtung auf das Zwischenprodukt 3 und von diesem weg zu bewegen.

Unter Bezug auf die Fig. 7a) bis f) werden nachfolgend verschiedene Stadien eines Abgabezyklus beschrieben, wobei die Fig. 7a) bis f) jeweils dem unter Bezug auf die Fig. 2a) bis f) beschriebenen Stadium des Abgabezyklus entsprechen.

In Fig. 7a) befinden sich das hintere Wandungsstück 11h und die mittleren Wandungsstücke 11m in der oberen Ausgangsstellung, und lediglich das vordere Wandungsstück 11v ist in Richtung auf das Zwischenprodukt 3 abgesenkt (Situation entsprechend Fig. 2a).

In Fig. 7b) sind zusätzlich die mittleren Wandungsstücke 11m auf das Zwischenprodukt 3 abgesenkt (entsprechend Fig. 2b).

In Fig. 7c) sind alle Wandungsstücke 11v, 11m, 11h auf das Zwischenprodukt abgesenkt (entsprechend Fig. 2c).

In Fig. 7d) ist das vordere Wandungsstück 11v in der Ausgangsstellung angeordnet, und die mittleren Wandungsstücke 11m und das hintere Wandungsstück 11h sind auf dem Zwischenprodukt 3 angeordnet (Situation entsprechend Fig. 2d).

In Fg. 7e) sind die mittleren Wandungsstücke 11m und das vordere Wandungsstück 11v in der Ausgangsstellung angeordnet, und das hintere Wandungsstück 11h ist auf dem Zwischenprodukt 3 angeordnet (Situation entsprechend Fig. 2e).

In Fig. 7f) sind schließlich alle Wandungsstücke 11v, 11m, 11h in der Ausgangsstellung angeordnet (entsprechend Fig. 2f), und der Abgabezyklus ist beendet.

In einer alternativen Ausführungsform zu diesem Ausführungsbeispiel kann das Stadium der Fig. 7c) fehlen, sodass das vordere Wandungsstück 11v in seine Ausgangsstellung angehoben wird, während das hintere Wandungsstück 11h auf das Zwischenprodukt 3 abgesenkt wird.

In einer weiteren alternativen Ausführungsform des Ausführungsbeispiels der Fig. 7 umgreifen die Wandungsstücke 11v, 11m, 11h jeweils einen gleich großen Umfangswinkelbereich, das heißt jeweils 90°. Die Wandungsstücke 11v, 11m, 11h können grundsätzlich jeden beliebigen Umfangswinkelbereich umgreifen, wobei jedoch bevorzugt gegenüberliegende Wandungsstücke 11m bzw. 11v, 11h jeweils einen gleich großen Umfangswinkelbereich umgreifen.

In einer weiteren alternativen Ausführungsform des Ausführungsbeispiels der Fig. 7 entfallen die mittleren Wandungsstücke 11m, und das vordere und hintere Wandungsstück 11v, 11h umgreift jeweils einen Umfangswinkelbereich von 180°. Allgemein kann eine beliebige Anzahl von Wandungsstücken vorgesehen sein, um den Leitschacht 9 bereichsweise gesteuert in Richtung auf das Zwischenprodukt 3 zu verlängern.

Das Zwischenprodukt 3 ist vorzugsweise ein flächiges Lebensmittel, z.B. ein Pizzaboden, eine Baguette- oder Brötchenhälfte, ein Kuchen oder kann ein zu befüllender Behälter mit einer dem Leitschacht 9 zugewandten Öffnung, z.B. eine Tüte, Dose oder Kartonage sein.

Das Gut 7 besteht vorzugsweise aus stückigem Lebensmittel und kann beispielsweise geriebener Käse oder Hackfleisch sein oder durch Frucht-, Gemüse- oder Fleischstücke gebildet sein, wobei das Gut 7 wahlweise in gefrorener Form vorliegen und verarbeitet werden kann.

Die Zuführeinrichtung 5 kann alternativ zu einem Förderband eine Rüttelrinne sein.

Die Kolben-Zylinder-Einheiten 23, 24 können hydraulisch oder pneumatisch betätigt sein.

Der Leitschacht 9 weist bevorzugt eine an das Zwischenprodukt 3 angepasste Querschnittsform auf, so daß diese beispielsweise kreisförmig für einen Pizzaboden (Zwischenprodukt 3) ist. Der Leitschacht 9 kann daher allgemein jede geeignete Querschnittsform aufweisen, beispielsweise quadratisch, rechteckig oder elliptisch.

Ebenso weist der Leitring 17 bevorzugt eine an das Zwischenprodukt 3 angepasste Querschnittsform auf, so daß diese beispielsweise im Fall eines Pizzabodens (Zwischenprodukt 3) kreisförmig ist. Der Leitring 17 kann daher allgemein jede geeignete Querschnittsform aufweisen, beispielsweise quadratisch, rechteckig oder elliptisch.

Bevorzugt ist der Abwurfrand der Zuführeinrichtung 5 durch eine Abwurfkante gebildet.

### Bezugszeichenliste:

- 1: Produktförderer (Förderband)
- 1A: Antrieb des Produktförderers
- 3: Zwischenprodukt
- 3S: Streifen des Zwischenprodukts 3, der momentan mit Gut 7 belegt wird
- 5: Zuführeinrichtung (Förderband)
- 5A: Antrieb der Zuführeinrichtung
- 7: Gut
- 9: Leitschacht
- 9uE: unterer Endabschnitt des Leitschachts
- 11v: vorderes Wandungsstück
- 11m: mittleres Wandungsstück
- 11h: hinteres Wandungsstück
- 13: Antrieb
- 17: Leitring
- 17h: hinterer Abschnitt des Leitrings
- 17m: mittlerer Abschnitt des Leitrings
- 17v: vorderer Abschnitt des Leitrings
- 19: Schwenkachse
- 21: Aufnahmebereich
- 23: vordere Kolben-Zylinder-Einheit
- 24: hintere Kolben-Zylinder-Einheit
- 25: Prallplatte
- 25D: Drehachse der Prallplatte 25
- 27: Leitung
- 29: Steuerung
- 31: Faltenbalg
- PR: Produktförderrichtung
- ZR: Zuführrichtung

## Patentansprüche

1. Verfahren zum Belegen oder Befüllen von über einen Produktförderer (1) herangeführten Lebensmitteln oder Behältern (3) während eines Abgabezyklus mit schütt- oder rieselfähigem Gut (7), das die Schritte umfaßt:
a) Heranführen eines Lebensmittels oder Behälters (3) mittels eines Produktförderers (1) entlang einer Produktförderrichtung (PR),
b) Heranführen des Guts (7) mittels eines Zuführeinrichtung (5) entlang einer Zuführrichtung (ZR),
c) Abgeben einer vorbestimmten Menge des Guts (7) während des Abgabezyklus von der Zuführeinrichtung (5) durch einen Leitschacht (9) in oder auf das Lebensmittel oder den Behälter (3), wobei der Leitschacht (9) zu Beginn des Abgabezyklus in einer Anfangsposition direkt über dem Lebensmittel oder Behälter (3) angeordnet ist, dann entlang der Produktförderrichtung (PR) in Positionsübereinstimmung mit dem Lebensmittel oder Behälter (3) in eine Endposition verfahren und von dort in die Anfangsposition zurück verfahren wird, so daß das Lebensmittel oder der Behälter (3) mit dem Gut (7) belegt oder befüllt wird,
**gekennzeichnet durch**
d1) Bereitstellen von bewegbaren, in Produktförderrichtung (PR) gesehen vorderen und hinteren Leitbereichen,
d2) Bewegen des in Produktförderrichtung (PR) vorderen Leitbereichs (11v; 17v) zwischen den Leitschacht (9) und das Lebensmittel oder den Behälter (3) und anschließend
d3) Bewegen des in Produktförderrichtung (PR) hinteren Leitbereichs (11h; 17h) zwischen den Leitschacht (9) und das Lebensmittel oder den Behälter (3), wobei
der vordere Leitbereich (11v; 17v) im Schritt d2) zwischen den Leitschacht (9) und das Lebensmittel oder der Behälter (3) bewegt wird, bevor der Leitschacht (9) in der Anfangsposition zu Beginn des Abgabezyklus angeordnet ist, und/oder der vordere Leitbereich (11v; 17v) von dem Lebensmittel oder dem Behälter (3) abgehoben wird, bevor der Leitschacht (9) in seiner Endposition am Ende des Abgabezyklus angeordnet ist.

2. Verfahren nach Anspruch 1, **dadurch gekennzeichnet, daß** zwischen den Schritten d2) und d3) oder gleichzeitig mit dem Schritt d2) oder d3) zwei gegenüberliegende in Produktförderrichtung gesehen mittlere Leitbereiche (11m; 17m) zwischen dem Leitschacht (9) und dem Lebensmittel oder Behälter (3) angeordnet werden.

3. Verfahren nach einem der vorangehenden Ansprüche, **dadurch gekennzeichnet, daß** die Lebensmittel oder Behälter (3) auf dem Produktförderer (1) kontinuierlich gefördert werden.

4. Verfahren nach einem der vorangehenden Ansprüche, **dadurch gekennzeichnet, daß** ein unterer Rand des vorderen und/oder der mittleren und/oder des hinteren Leitbereichs bzw. Leitbereiche (11 v, 11m, 11h; 17v, 17m, 17h) im Schritt d2) und/oder d3) in einem minimalen vertikalen Abstand von weniger als 5 cm oder weniger als 3cm oder weniger als 2cm oder weniger als 1 cm von dem Lebensmittel oder Behälter (3) angeordnet werden.

5. Verfahren nach einem der vorangehenden Ansprüche, **dadurch gekennzeichnet, daß** ein unterer Rand des vorderen und/oder des mittleren und/oder des hinteren Leitbereichs bzw. Leitbereiche (11v, 11m, 11h; 17v, 17m, 17h) auf dem Produktförderer (1) das Lebensmittel oder den Behälter (3) umschließend angeordnet wird bzw. werden.

6. Verfahren nach einem der vorangehenden Ansprüche, **dadurch gekennzeichnet, daß** der Leitschacht (9) zu Beginn des Abgabezyklus aus seiner Anfangsposition in Richtung auf das Lebensmittel oder den Behälter (3) abgesenkt und am Ende des Abgabezyklus in seine Endposition angehoben wird.

7. Vorrichtung zum Belegen oder Befüllen von über einen Produktförderer (1) herangeführten Lebensmitteln oder Behältern (3) mit schütt- oder rieselfähigem Gut (7) mittels einer Zuführeinrichtung (5) durch einen Leitschacht (9), **dadurch gekennzeichnet, daß** der Leitschacht (9) durch entlang seines Umfangs angeordnete, selektiv bewegbare Leitbereiche (11v, 11m, 11h; 17v, 17m, 17h) umfangsbereichsweise in Richtung auf das Lebensmittel oder den Behälter (3) verlängerbar ist.

8. Vorrichtung nach Anspruch 7, **dadurch gekennzeichnet, daß** der Leitschacht (9) durch mindestens einen vorderen und hinteren Leitbereich (11v, 11h) verlängerbar ist.

9. Vorrichtung nach Anspruch 8, **dadurch gekennzeichnet, daß** der Leitschacht (9) durch zwei mittlere Leitbereiche (11m; 17m) verlängerbar ist.

10. Vorrichtung nach Anspruch 9, **dadurch gekennzeichnet, daß** die vorderen, mittleren und hinteren Leitbereiche (17v, 17m, 17h) integral durch einen Leitring (17) gebildet sind.

11. Vorrichtung nach Anspruch 10, **dadurch gekennzeichnet, daß** der Leitring (17) an einer Schwenkachse (19) gehalten ist, die durch einen Antrieb (13) drehbar ist, um den Leitring (17) zu verschwenken, wobei der Leitring (17) einen unteren Endabschnitt (9uE) des Leitschachts (9) umgreift.

12. Vorrichtung nach Anspruch 10, **dadurch gekennzeichnet, daß** der Leitring (17) koaxial zu dem unteren Endabschnitt (9uE) des Leitschachts (9) angeordnet ist, denselben Querschnitt aufweist wie der untere Endabschnitt (9uE) und durch eine Schwenkachse (19) gehalten ist, die durch einen Antrieb (13) drehbar ist, um den Leitring (17) zu verschwenken.

13. Vorrichtung nach Anspruch 10, **dadurch gekennzeichnet, daß** der Leitring (17) den Leitschacht (9) vollständig umgreift.

14. Vorrichtung nach Anspruch 13, **dadurch gekennzeichnet, daß** der Leitring (17) an dem Leitschacht (9) gehalten ist.

15. Vorrichtung nach einem der vorangehenden Ansprüche, **dadurch gekennzeichnet, daß** der Leitschacht (9) an seinem oberen Ende einen sich konisch erweiternden Aufnahmebereich (21) aufweist.

16. Vorrichtung nach Anspruch 13, 14 oder 15, **dadurch gekennzeichnet, daß** dem Leitschacht (9) zwei, in Produktförderrichtung (PR) gegenüberliegende Kolben-Zylinder-Einheiten (23) zugeordnet sind, die jeweils mit einem Ende an dem Leitring (17) und mit dem anderen Ende an dem Aufnahmebereich (21) festgelegt sind.

17. Vorrichtung nach einem der Ansprüche 10 bis 16, **dadurch gekennzeichnet, daß** der Leitring (17) eine Innenkontur aufweist, die einer Außenkontur des Lebensmittels oder Behälters (3) entspricht.

18. Vorrichtung nach einem der Ansprüche 10 bis 17, **dadurch gekennzeichnet, daß** der Leitring (17) eine Innenkontur aufweist, die kleiner als eine Außenkontur des Lebensmittels oder Behälters (3) ist, um das Gut (7) nur auf einem Teilbereich des Lebensmittels oder Behälters (3) anzuordnen.

## Claims

1. Method of garnishing or filling foodstuffs or containers (3), which are advanced by way of product conveyor (1), during a delivery cycle with pourable or tricklable stock (7), which comprises the steps:
a) advancing a foodstuff or container (3) by means of a product conveyor (1) along a product conveying direction (PR),
b) advancing the stock (7) by means of a feed device (5) along a feed direction (ZR),
c) delivering a predetermined quantity of the stock (7) during the delivery cycle from the feed device (5) through a guide shaft (9) into or onto the foodstuff or the container (3), wherein the guide shaft (9) at the start of the delivery cycle is arranged in an initial position directly above the foodstuff or container (3), then is moved along the product conveying direction (PR) into an end position in positional correspondence with the foodstuff or container (3) and from there is moved back into the initial position so that the foodstuff or the container (3) is garnished by or filled with the stock (7),
**characterised by**
d1) provision of movable guide regions at the front and back as seen in product conveying direction,
d2) movement of the guide region (11v; 17v), which is at the front in the product conveying direction (PR), between the guide shaft (9) and the foodstuff or the container (3) and subsequently
d3) movement of the guide region (11h; 17h), which is at the back in the product conveying direction (PR), between the guide shaft (9) and the foodstuff or the container (3), wherein
the front guide region (11v; 17v) is moved in the step d2) between the guide shaft (9) and the foodstuff and the container (3) before the guide shaft (9) is arranged in the initial position at the start of the delivery cycle, and/or the front guide region (11v; 17v) is raised from the foodstuff or the container (3) before the guide shaft (9) is arranged in its end position at the end of the delivery cycle.

2. Method according to claim 1, **characterised in that** between the steps d2) and d3) or simultaneously with the steps d2) or d3) two middle guide regions (11m; 17m), which are opposite as seen in the product conveying direction, are arranged between the guide shaft (9) and the foodstuff or the container (3).

3. Method according to one of the preceding claims, **characterised in that** the foodstuff or container (3) is continuously conveyed on the product conveyor (1).

4. Method according to any one of the preceding claims, **characterised in that** a lower edge of the front and/or middle and/or rear guide region or guide regions (11v, 11m, 11h; 17v, 17m, 17h) in the step d2) and/or d3) is or are arranged at a minimum vertical spacing of less than 5 centimetres or less than 3 centimetres or less than 2 centimetres or less than 1 centimetre from the foodstuff or the container (3).

5. Method according to any one of the preceding claims, **characterised in that** a lower edge of the front and/or the middle and/or the back guide region or guide regions (11v, 11m, 11h; 17v, 17m, 17h) is or are arranged on the product conveyor (1) to surround the foodstuff or the conveyor (3).

6. Method according to any one of the preceding claims, **characterised in that** the guide shaft (9) at the beginning of the delivery cycle is lowered from its initial position in direction towards the foodstuff or the container (3) and is raised at the end of the delivery cycle into its end position.

7. Device for garnishing or filling foodstuffs or containers (3), which are advanced by way of a product conveyor (1), with pourable or tricklable stock (7) by means of a feed device (5) via a guide shaft (9), **characterised in that** the guide shaft (9) is capable of lengthening in circumferential regions in direction towards the foodstuff or the container (3) by selectively movable guide regions guide (11v, 11m, 11h; 17v, 17m, 17h) arranged along its circumference.

8. Device according to claim 7, **characterised in that** the guide shaft (9) is capable of lengthening by at least one front and back guide region (11v, 11h).

9. Device according to claim 8, **characterised in that** the guide shaft (9) is capable of lengthening by two middle guide regions (11m; 17m).

10. Device according to claim 9, **characterised in that** the front, middle and rear guide regions (17v, 17n, 17h) are formed integrally by a guide ring (17).

11. Device according to claim 10, **characterised in that** the guide ring (17) is mounted at a pivot axle (19) which is rotatable by a drive (13) in order to pivot the guide ring (17), wherein the guide ring (17) engages around a lower end section (9uE) of the guide shaft (9).

12. Device according to claim 10, **characterised in that** the guide ring (17) is arranged coaxially with the lower end section (9uE) of the guide shaft (9), has the same cross-section as the lower end section (9uE) and is mounted by a pivot axle (19) which is rotatable by a drive (13) in order to pivot the guide ring (17).

13. Device according to claim 10, **characterised in that** the guide ring (17) completely engages around the guide shaft (9).,

14. Device according to claim 13, **characterised in that** the guide ring (17) is mounted on the guide shaft (9).

15. Device according to any one of the preceding claims, **characterised in that** the guide shaft (9) has at the upper end thereof a conically widening receiving region (21).

16. Device according to claim 13, 14 or 15, **characterised in that** the two piston-cylinder units (23) which are opposite in the product conveying direction (PR) are associated with the guide shaft (9) and are each fixed by one end thereof to the guide ring (17) and by the other end thereof to the receiving region (21).

17. Device according to any one of claims 10 to 18, **characterised in that** the guide ring (17) has an inner profile corresponding with an outer profile of the foodstuff or the container (3).

18. Device according to any one of claims 1 to 17, **characterised in that** the guide ring (17) has an inner profile which is smaller than an outer profile of the foodstuff or the container (3) in order to arrange stock (7) only on a sub-region of the foodstuff or the container (3).

## Revendications

1. Procédé pour, pendant un cycle de délivrance, garnir ou remplir d'une matière (7), pouvant s'écouler ou pouvant être répandue, des produits alimentaires ou des récipients (3) apportés au moyen d'un transporteur de produit (1), qui comprend les étapes suivantes :
a) apport d'un produit alimentaire ou d'un récipient (3), au moyen d'un transporteur de produit (1), le long d'une direction de transport de produit (PR),
b) apport de la matière (7), au moyen d'un équipement d'alimentation (5), le long d'une direction d'alimentation (ZR),
c) délivrance d'une quantité prédéterminée de la matière (7), pendant le cycle de délivrance, au moyen de l'équipement d'alimentation (5) et par un puits de guidage (9) dans ou sur le produit alimentaire ou le récipient (3), sachant que le puits de guidage (9) est, au début du cycle de délivrance, dans une position initiale, disposé juste au-dessus du produit alimentaire ou du récipient (3), puis est déplacé le long de la direction de transport de produit (PR) en coïncidence de position avec le produit alimentaire ou le récipient (3) et est ramené de là dans la position initiale, de sorte que le produit alimentaire ou le récipient (3) est garni ou rempli de la matière (7),
**caractérisé par**
d1) la mise à disposition de zones de guidage mobiles antérieure et postérieure, considéré dans la direction de transport de produit (PR),
d2) le déplacement de la zone de guidage (11v ; 17v), antérieure dans la direction de transport de produit (PR), entre le puits de guidage (9) et le produit alimentaire ou le récipient (3),
d3) puis le déplacement de la zone de guidage (11h ; 17h), postérieure dans la direction de transport de produit (PR), entre le puits de guidage (9) et le produit alimentaire ou le récipient (3),
sachant que la zone de guidage antérieure (11v ; 17v) est, à l'étape d2), déplacée entre le puits de guidage (9) et le produit alimentaire ou le récipient (3) avant que le puits de guidage (9) ne soit disposé dans la position initiale au début du cycle de délivrance, et/ou la zone de guidage antérieure (11v ; 17v) est relevée à l'écart du produit alimentaire ou du récipient (3) avant que le puits de guidage (9) ne soit disposé dans sa position finale à la fin du cycle de délivrance.

2. Procédé selon la revendication 1, **caractérisé en ce que**, entre les étapes d2) et d3) ou en même temps que l'étape d2) ou d3), deux zones de guidage opposées (11m ; 17m), intermédiaires considéré dans la direction de transport de produit, sont disposées entre le puits de guidage (9) et le produit alimentaire ou le récipient (3).

3. Procédé selon l'une des revendications précédentes, **caractérisé en ce que** les produits alimentaires ou les récipients (3) sont transportés en continu sur le transporteur de produit (1).

4. Procédé selon l'une des revendications précédentes, **caractérisé en ce qu'**un bord inférieur de la ou des zones de guidage antérieures et/ou intermédiaires et/ou postérieures (11v, 11m, 11h ; 17v, 17m, 17h) est, à l'étape d2) et/ou d3), disposé à une distance verticale minimale du produit alimentaire ou du récipient (3) qui est inférieure à 5 cm ou inférieure à 3 cm ou inférieure à 2 cm ou inférieure à 1 cm.

5. Procédé selon l'une des revendications précédentes, **caractérisé en ce qu'**un bord inférieur de la ou des zones de guidage antérieures et/ou intermédiaires et/ou postérieures (11v, 11m, 11h ; 17v, 17m, 17h) est disposé en entourant le produit alimentaire ou le récipient (3) sur le transporteur de produit (1).

6. Procédé selon l'une des revendications précédentes, **caractérisé en ce que** le puits de guidage (9) est, au début du cycle de délivrance, abaissé depuis sa position initiale en direction du produit alimentaire ou du récipient (3) et, à la fin du cycle de délivrance, relevé dans sa position finale.

7. Dispositif pour, au moyen d'un équipement d'alimentation (5) et par un puits de guidage (9), garnir ou remplir d'une matière (7), pouvant s'écouler ou pouvant être répandue, des produits alimentaires ou des récipients (3) apportés au moyen d'un transporteur de produit (1), **caractérisé en ce que** le puits de guidage (9) peut, par des zones de guidage (11v, 11m, 11h ; 17v, 17m, 17h) disposées le long de son pourtour et pouvant être sélectivement déplacées, être prolongé sur une région de son pourtour en direction du produit alimentaire ou du récipient (3).

8. Dispositif selon la revendication 7, **caractérisé en ce que** le puits de guidage (9) peut être prolongé par au moins une zone de guidage antérieure et une zone de guidage postérieure (11v, 11h).

9. Dispositif selon la revendication 8, **caractérisé en ce que** le puits de guidage (9) peut être prolongé par deux zones de guidage intermédiaires (11m ; l7rn).

10. Dispositif selon la revendication 9, **caractérisé en ce que** les zones de guidage antérieures, intermédiaires et postérieures (17v, 17m, 17h) sont formées d'un seul tenant par une bague de guidage (17).

11. Dispositif selon la revendication 1 p, **caractérisé en ce que** la bague de guidage (17) est maintenue sur un axe de pivotement (19) qui est rotatif au moyen d'un entraînement (13) afin de faire pivoter la bague de guidage (17), sachant que la bague de guidage (17) s'engage autour d'une partie terminale inférieure (9uE) du puits de guidage (9).

12. Dispositif selon la revendication 10, **caractérisé en ce que** la bague de guidage (17) est disposée coaxialement à la partie terminale inférieure (9uE) du puits de guidage (9), présente la même section transversale que la partie terminale inférieure (9uE) et est maintenue par un axe de pivotement (19) qui est rotatif au moyen d'un entraînement (13) afin de faire pivoter la bague de guidage (17).

13. Dispositif selon la revendication 10, **caractérisé en ce que** la bague de guidage (17) entoure complètement le puits de guidage (9).

14. Dispositif selon la revendication 13, **caractérisé en ce que** la bague de guidage (17) est maintenue sur le puits de guidage (9).

15. Dispositif selon l'une des revendications précédentes, **caractérisé en ce que** le puits de guidage (9) présente à son extrémité supérieure une région réceptrice (21) s'élargissant coniquement.

16. Dispositif selon la revendication 13, 14 ou 15, **caractérisé en ce que** deux unités piston-cylindre (23), opposées dans la direction de transport de produit (PR), sont associées au puits de guidage (9) et sont chacune fixées par une extrémité à la bague de guidage (17) et par l'autre extrémité à la région réceptrice (21).

17. Dispositif selon l'une des revendications 10 à 16, **caractérisé en ce que** la bague de guidage (17) présente un contour intérieur qui correspond à un contour extérieur du produit alimentaire ou du récipient (3).

18. Dispositif selon l'une des revendications 10 à 17, **caractérisé en ce que** la bague de guidage (17) présente un contour intérieur qui est inférieur à un contour extérieur du produit alimentaire ou du récipient (3), afin de ne disposer la matière (7) que sur une région partielle du produit alimentaire ou du récipient (3).
